# EUROPÄISCHE PATENTANMELDUNG

(11) **EP 0 779 749 A2**
(43) Veröffentlichungstag der Anmeldung: **18.06.1997**
(21) Anmeldenummer: 96402726.2
(22) Anmeldetag: 12.12.1996
(51) Int. Cl.: H04Q 3/545

(54) **Verfahren zum Einbinden von Zusatz-Funktions-Modulen in eine Steuereinrichtung eines Vermittlungssystem und Vermittlungssystem**

(30) Priorität: 16.12.1995 DE 19547108
(71) Anmelder: ALCATEL ALSTHOM COMPAGNIE GENERALE D'ELECTRICITE, 75008 Paris (FR)
(72) Erfinder: Daase, Detlef, Dr., 12205 Berlin (DE); Legat, Karl-Heinz, 71272 Renningen (DE); Müller, Irina, 12555 Berlingen (DE)
(74) Vertreter: Knecht, Ulrich Karl, Dipl.-Ing.

(57) **Zusammenfassung**

Die Erfindung betrifft ein Verfahren zum Einbinden von Zusatz-Funktions-Modulen in eine Steuereinrichtung eines Vermittlungssystems und ein Vermittlungssystem. Ein Vermittlungssystem enthält eine Steuereinrichtung (CONTR), die mit einer Vielzahl von miteinander verkoppelten Basis-Funktions-Modulen (APP1 bis APP3, BP1 bis BP4) zur Steuerung von Vermittlungsfunktionen des Vermittlungssystems versehen ist. Die Basis-Funktions-Module (APP1 bis APP3, BP1 bis BP4) werden mit einem oder mit mehreren Zugangs-Modulen (ACC) verkoppelt. Die Zusatz-Funktions-Module (APP11 bis APP23, KONVERT1, KONVERT2) greifen allein über die Zugangs-Module (ACC) auf Basis-Funktions-Module (APP1 bis APP3, BP1 bis BP4) zu, wobei die Zugangs-Module (ACC) abhängig von dem zugreifenden Zusatz-Funktions-Modul (APP11 bis APP23, KONVERT1, KONVERT2) den Zusatz-Funktions-Modulen (APP11 bis APP23, KONVERT1, KONVERT2) jeweils eine individuelle logische Zugriffs-Schnittstelle (INT1 bis INT4) zu Basis-Funktions-Modulen (APP1 bis APP3, BP1 bis BP4) bereitstellen.

## Beschreibung

Die Erfindung betrifft ein Verfahren zum Einbinden von Zusatz-Funktions-Modulen in eine Steuereinrichtung eines Vermittlungssystems nach dem Oberbegriff von Anspruch 1 und ein Vermittlungssystem nach dem Oberbegriff von Anspruch 11.

Die Erfindung geht von dem allgemein bekannten Prinzips des Aufbaus der Steuerung eines Vermittlungssystems aus. Eine gute Darstellung eines solchen Aufbaus wird beispielsweise in dem Artikel "Hardware und Software des Dienstvermittlungssystems PAsst" aus der Zeitschrift PKI Technische Mitteilungen, 2/1989, Seiten 15-23 von Joachim Dietrichs et al. gegeben.

Dieses Vermittlungssystem verfügt über einen zentralen Netzwerk-Prozessor, der zusammen mit Peripherie-Prozessoren sämtliche Kontroll-, Verwaltungs- und Steuerungsvorgänge ausführt und die Hardware-Plattform für die Software des Vermittlungssystems bildet.

Die Software des Vermittlungssystems basiert auf einem Echtzeit-Betriebssystem und steuert alle vermittlungstechnischen Abläufe, verwaltet das System und kontrolliert die Verfügbarkeit aller Systemkomponenten. Um die Veränderung und Weiterentwicklung der Software zu erleichtern, ist die Software in Funktions-Module, sogenannte Building-Blocks, als konstruktive Grundeinheit gegliedert. Ein solches Funktions-Modul besteht aus Programmen und Daten und stellt anderen Funktions-Modulen über eine definierte Schnittstelle Dienste zur Verfügung oder nimmt solche Dienste von diesen in Anspruch. Die gesamte Software ist in mehrere Schichten gegliedert, die jeweils aus einem oder mehreren Funktions-Modulen bestehen. Der Schichtenfolge liegt das Ordnungsprinzip zugrunde, daß jedes Funktions-Modul nur die Dienste darunterliegender Schichten benutzen darf. Dadurch werden die Beziehungen zwischen Funktions-Modulen zusätzlich systematisiert, wodurch die Veränderung der Software zusätzlich erleichtert wird.

Dieses Software-Architektur-Prinzip erleichtert zwar das Einbinden neuer Funktions-Module und das Verändern bestehender Funktions-Module, solche Veränderungen sind jedoch immer noch mit einem Risiko von Fehlfunktionen verbunden und fordern eine detaillierte Kenntnis des gesamten Vermittlungssystems.

Der Erfindung liegt die Aufgabe zugrunde, das Einbinden von zusätzlichen Funktions-Modulen in eine Steuereinrichtung eines Vermittlungssystems zu verbessern.

Diese Aufgabe wird gelöst durch ein Verfahren zum Einbinden von Zusatz-Funktions-Modulen in eine Steuereinrichtung eines Vermittlungssystems nach der Lehre von Anspruch 1 sowie durch ein Vermittlungssystem nach der Lehre von Anspruch 11.

Die Grundidee der Erfindung ist, daß den zusätzlichen Funktions-Modulen, den Zusatz-Funktions-Modulen, nicht mehr der Zugriff auf alle Funktions-Module des Vermittlungssystems möglich ist, sondern daß sie allein über Zugangs-Module auf die Funktions-Module zugreifen können und daß diese Zusatz-Module jedem der Zugangs-Funktions-Module eine individuelle logische Zugriffs-Schnittstelle zu den Funktions-Modulen zur Verfügung stellen. Hierdurch ist es insbesondere möglich, für Zusatz-Funktions-Module den Zugriff auf die Funktions-Module individuell zu begrenzen oder für diese eine individuelle Darstellung der Daten der Funktions-Module zu erzeugen.

Vorteilhafte Ausgestaltungen der Erfindung sind den Unteransprüchen zu entnehmen.

Die Erfindung hat den Vorteil, daß auch von Dritten entwickelte Zusatz-Funktions-Module in die Steuerung eines Vermittlungssystems auf vorteilhafte Weise eingebunden werden können:

Die Zugriffsmöglichkeiten dieser Zusatz-Funktions-Module werden durch die Zugangs-Module auf das für die jeweilige Funktion notwendige Maß beschränkt, so daß kein unkontrollierter Zugriff auf das Vermittlungssystem und insbesondere sicherheitsrelevante Teile des Vermittlungssystems erfolgen kann.

Ein weiterer Vorteil ist, daß keine Offenlegung interner Strukturen zu erfolgen braucht, um Zusatz-Funktions-Module einbinden zu können. Die gewünschten Zugriffsmöglichkeiten können in der gewünschten Form bereitgestellt werden. Dadurch bleiben interne Strukturen verdeckt und es bleibt die Freiheit erhalten, diese internen Strukturen zu verändern, ohne daß dies Auswirkungen auf die Zusatz-Funktions-Module hätte.

Noch ein Vorteil der Erfindung ist, daß für jedes der Zusatz-Funktions-Module eine individuelle logische Schnittstelle bereitgestellt werden kann, die lediglich die für die Funktionen des Zusatz-Funktions-Moduls notwendigen Kenntnisse der Software des Vermittlungssystems erfordern.

Im folgenden wird die Erfindung anhand eines Ausführungsbeispiels unter Zuhilfenahme beiliegender Zeichnungen beispielhaft erläutert:
- Fig. 1: zeigt ein Blockschaltbild eines erfindungsgemäßen Vermittlungssystems.
- Fig. 2: zeigt eine funktionelle Darstellung einer Steuereinrichtung für das erfindungsgemäße Vermittlungssystem nach Fig. 1.
- Fig. 3: zeigt eine Darstellung der Software-Architektur des erfindungsgemäßen Vermittlungssystems nach Fig. 1.

Im Ausführungsbeispiel wird die Durchführung des erfindungsgemäßen Verfahrens zum Einbinden von Zusatz-Funktions-Modulen in eine Steuereinrichtung eines Vermittlungssystems in einem erfindungsgemäßen Vermittlungssystem erläutert.

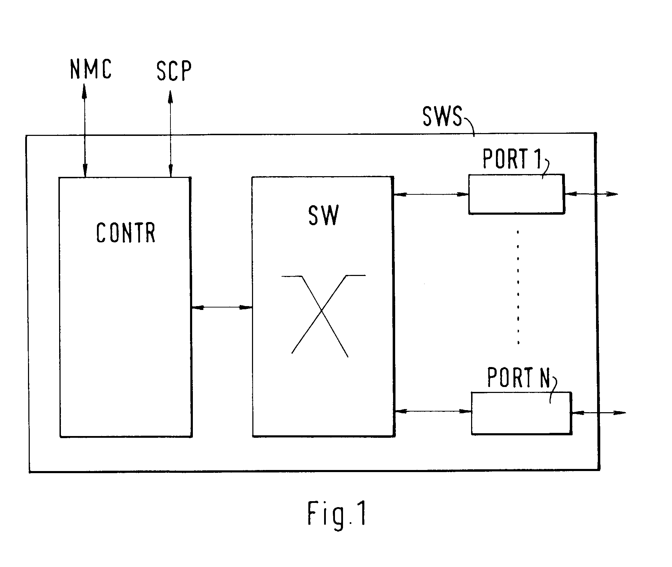

Fig. 1 zeigt ein Vermittlungssystem SWS mit einer Steuereinrichtung CONTR, einem Koppel netz SW und N Anschlußeinrichtungen PORT1 bis PORTN.

Die Anschlußeinrichtungen PORT1 bis PORTN dienen dem Anschluß von Teilnehmern und anderen Vermittlungsstellen und tauschen so mit diesen und mit dem Koppelnetz SW Daten aus.

Das Koppel netz SW wird von der Steuereinrichtung CONTR gesteuert und schaltet Verbindungen zwischen den Anschlußeinrichtungen PORT1 bis PORTN und zwischen der Steuereinrichtung CONTR und den Anschlußeinrichtungen PORT1 bis PORTN.

Die Steuereinrichtung CONTR steuert alle vermittlungstechnischen Vorgänge, verwaltet das Vermittlungssystem SWS und stellt die notwendigen Funktionen für die Anbindung eines Netzwerkmanagement- und Dienstemanagementsystems bereit. Hierzu tauscht sie Daten mit dem Koppel netz SW sowie mit einer Netzwerkmanagementeinrichtung NMC und einer Dienststeuereinrichtung SCP aus. Die Steuereinrichtung CONTR verfügt als Hardware-Basis über ein oder über mehrere Rechnersysteme, die mit entsprechenden peripheren Komponenten ausgestattet sind.

Die Hardware-Basis der Steuereinrichtung CONTR besteht somit entweder aus einem zentralen Rechensystem, daß mit einem oder mehreren kleineren Rechensystemen kommuniziert, oder aus einer Vielzahl gleichberechtigter Rechensysteme, die miteinander kommunizieren. Die Kommunikation wird hierbei über das Koppelnetz SW oder über ein eigenständiges Kommunikationssystem abgewickelt.

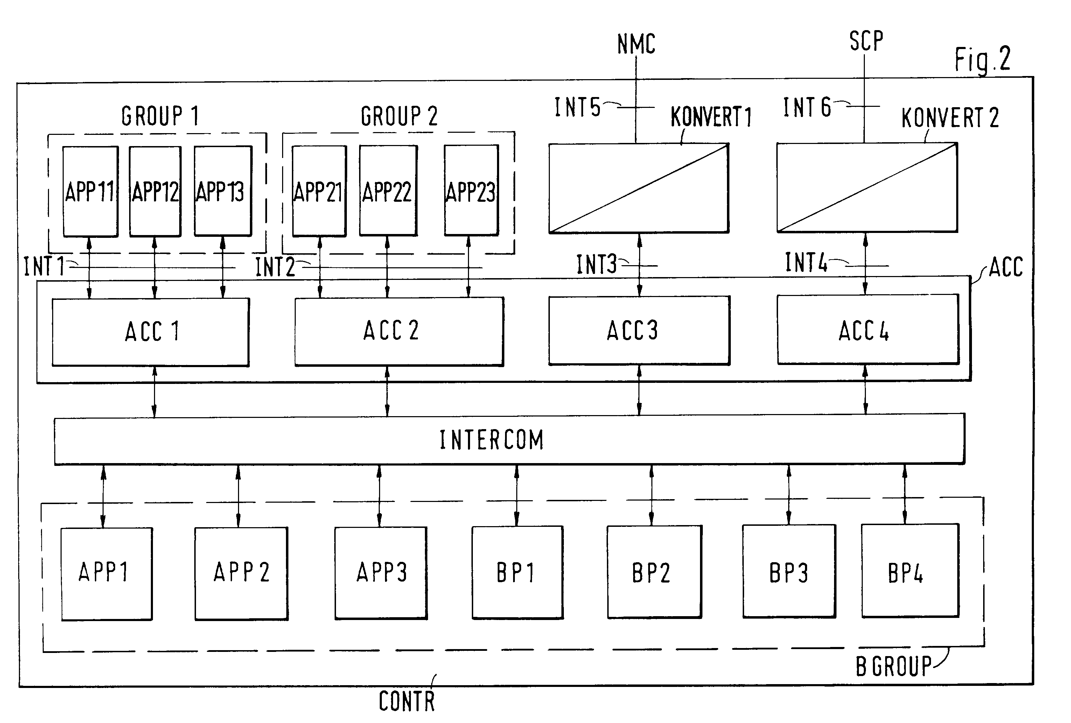

Fig. 2 zeigt den funktionellen Aufbau der Steuereinrichtung CONTR. Es ist hierbei möglich, daß die einzelnen Funktionen der Steuereinrichtung CONTR von unterschiedlichen Rechnersystemen der Steuereinrichtungen CONTR erbracht werden.

Die Steuereinrichtung CONTR weist sieben Funktions-Module APP1 bis APP3 und BP1 bis BP4, eine Kommunikations-Funktion INTERCOM, ein Zugangs-Modul ACC, und acht Zusatz-Funktions-Module APP11 bis APP23 sowie KONVERT1 und KONVERT2 auf. Die Funktions-Module APP1 bis APP3 und BP1 bis BP4 bilden eine Funktions-Gruppe BGROUP. Die Zusatz-Funktions-Module APP11 bis APP13 und APP21 bis APP23 bilden eine Funktions-Gruppe GROUP1 bzw. GROUP2. Die Funktions-Module APP1 bis APP3 und BP1 bis BP4 sowie das Zugangs-Modul ACC sind über die Kommunikations-Funktion INTERCOM miteinander verkoppelt. Die Zusatz-Funktions-Module APP11 bis APP23 sowie KONVERT1 und KONVERT2 kommunizieren jeweils mit dem Zugangs-Modul ACC. Die Zusatz-Funktions-Module KONVERT1 und KONVERT2 tauschen Daten mit der Netzwerkmanagementeinrichtung NMC bzw. der Dienststeuereinrichtung SCP aus.

Die Funktions-Module der Funktions-Gruppe BGROUP sind Basis-Funktions-Module, die alle für den Betrieb des Vermittlungssystems notwendigen Funktionen bereitstellen. Die Zahl dieser Funktions-Module ist beispielhaft gewählt. Die Funktions-Module BP1 bis BP4 stellen hierbei die grundlegenden Funktionen wie beispielsweise Geräteverwaltung oder Verbindungsverwaltung bereit. Die Funktions-Module APP1 bis APP3 stellen übergeordnete Funktionen, beispielsweise der Teilnehmerverwaltung oder der Verkehrserfassung bereit. Die Funktions-Module der Funktions-Gruppe BGROUP werden jeweils von Programmen und Daten gebildet, wobei durch die Ausführung dieser Programme auf einem Rechensystem der Steuereinrichtung CONTR die jeweiligen Funktionen erbracht werden. Die Funktions-Module der Funktions-Gruppe BGROUP kommunizieren miteinander über die Kommunikations-Funktion INTERCOM, wenn dies für die Durchführung ihrer jeweiligen Funktion erforderlich ist. Eine solche Kommunikation erfolgt hierbei durch Meldungsaustausch, durch Zugriff auf Daten eines anderen Funktions-Moduls oder durch Zugriff auf gemeinsame Daten, beispielsweise semipermanente Konfigurations- und Verwaltungsdaten.

Die Kommunikations-Funktion INTERCOM ermöglicht die Kommunikation zwischen den Funktions-Modulen der Funktions-Gruppe BGROUP und zwischen dem Zugangs-Modul ACC und diesen Funktions-Modulen. Die Kommunikations-Funktion INTERCOM wird somit von Funktionen zum Meldungsaustausch, beispielsweise Betriebssystemfunktionen zur Interprozesskommunikation oder von Funktionen eines Datenbank-Systems gebildet, die den Zugriff auf von diesem Datenbanksystem verwalteten Daten der Funktions-Module der Funktions-Gruppe BGROUP oder gemeinsamer Daten dieser Funktions-Module ermöglicht.

Die Zusatz-Funktions-Module der Funktions-Gruppen GROUP1 und GROUP2 erbringen ebenfalls übergeordnete Funktionen des Vermittlungssystems. Solche Funktionen sind beispielsweise Netzwerkmanagementfunktionen, Funktionen die die Bereitstellung von Diensten für Teilnehmer des Vermittlungssystems betreffen oder Funktionen der Gebührenverwaltung. Die Anzahl der Funktions-Gruppen GROUP1 und GROUP2 und der zugehörigen Zusatz-Funktions-Module ist hierbei beispielhaft gewählt. Die Zusatz-Funktions-Module APP11 bis APP23 werden von Programmen oder von Programmen und Daten gebildet. Sie stellen hierbei vorzugsweise Software-Produkte Dritter dar, d.h. daß die Einhaltung der für die Funktions-Gruppe BGROUP vereinbarten Regeln nicht ohne weiteres von diesen Zusatz-Funktions-Modulen erwartet werden kann.

Zur Durchführung ihrer Funktionen ist es notwendig, daß die Zusatz-Funktions-Module APP11 bis APP23 untereinander und mit Funktions-Modulen der Funktions-Gruppe BGROUP kommunizieren. Diese Kommunikation erfolgt über das Zugangs-Modul ACC, das den Zusatz-Funktions-Modulen der Funktions-Gruppe GROUP1 eine logische Schnittstelle INT1 und den Zusatz-Funktions-Modulen APP21 bis APP23 eine logische Schnittstelle INT2 zur Verfügung stellt.

Es ist auch möglich, daß die Zusatz-Funktions-Module APP11 bis APP23 untereinander oder innerhalb ihrer jeweiligen Funktions-Gruppe kommunizieren, ohne das diese Kommunikation über das Zugangs-Modul ACC durchgeführt wird.

Die Zusatz-Funktions-Module KONVERT1 und KONVERT2 sind für die Anbindung der Netzwerkmanagementeinrichtung NMC bzw. der Dienststeuereinrichtung SCP verantwortlich. Sie stellen für die Anbindung der Netzwerkmanagementeinrichtung NMC eine logische und physikalische Schnittstelle INT5 bzw. für die Anbindung der Dienststeuereinrichtung SCP eine logische und physikalische Schnittstelle INT6 zur Verfügung. Bei den Schnittstellen INT5 und INT6 handelt es sich hierbei um nomierte Schnittstellen, beispielsweise um die von der ITU-T nomierten Q.3 Schnittstelle bzw. die von der ITU-T nach Q.121× nomierten Schnittstelle zur Anbindung von Dienststeuereinrichtungen in der IN-Architektur (IN = Intelligent Network).

Das Zusatz-Funktions-Modul KONVERT1 bearbeitet den Protokoll-Stack für die Schnittstelle INT5 und stellt Funktionen bereit, die den Austausch von Befehlen und Daten zwischen den Funktions-Modulen der Funktions-Gruppe BGROUP und der Netzwerkmanagementeinrichtung NMC ermöglichen. Die Kommunikation des Zusatz-Funktions-Moduls KONVERT1 mit diesen Funktions-Modulen und mit den übrigen Zusatz-Funktions-Modulen erfolgt hierbei über das Zugangs-Modul ACC.

Für das Zusatz-Funktions-Modul KONVERT2 gilt entsprechendes.

Das Zugangs-Modul ACC stellt die Verbindung zwischen den Zusatz-Funktions-Modulen APP11 bis APP23 sowie KONVERT1 und KONVERT2 und den Funktions-Modulen APP1 bis APP3 sowie BP1 bis BP4 bereit. Es ermöglicht den Austauch von Meldungen zwischen den Zusatz-Funktions-Modulen und den Funktions-Modulen und den Zugriff der Zusatz-Funktions-Module auf Daten der Funktions-Module. Das Zugangs-Modul ACC ist einerseits über die Kommunikations-Funktion INTERCOM mit den Funktions-Modulen APP1 bis APP3 und BP1 bis BP4 verkoppelt und stellt andererseits den Zusatz-Funktions-Modulen APP11 bis APP23 sowie KONVERT1 und KONVERT2 jeweils eine individuelle logische Zugriffs-Schnittstelle zu diesen Funktions-Modulen bereit.

Die Steuerung CONTR ist hierbei so ausgestaltet, daß eine Kommunikation zwischen den Zusatz-Funktions-Modulen und den Funktions-Modulen allein über das Zugangs-Modul ACC erfolgen kann.

Das Zugangs-Modul ACC enthält vier Zugangs-Funktionen ACC1 bis ACC4. Die Zugangs-Funktionen ACC1 bis ACC4 sind hierbei den Zusatz-Funktions-Modulen der Funktions-Gruppe GROUP1, GROUP2, dem Zusatz-Funktions-Modul KONVERT1 bzw. dem Zusatz-Funktions-Modul KONVERT2 zugeordnet.

Abhängig von dem Zusatz-Funktions-Modul, das auf eine der Funktions-Module der Funktions-Gruppe BGROUP zugreifen will, wird diesem Zusatz-Funktions-Modul somit eine der Zugangs-Funktionen ACC1 bis ACC4 zugeordnet, die diesem eine individuelle logische Zugriffs-Schnittstelle, also die Schnittstelle INT1, INT2, INT3 bzw. INT4 bereitstellt.

Die von den Zusatz-Funktionen ACC1 bis ACC4 erbrachten Funktionen werden nun beispielhaft anhand der Zusatz-Funktion ACC1 erläutert:

Die Zugangs-Funktion ACC1 schränkt die Zugriffsmöglichkeiten der Zugangs-Funktions-Module APP11 bis APP3 auf die Funktions-Module der Funktions-Gruppe BGROUP ein und erzeugt für diese eine individuelle Darstellung der Zustände dieser Funktions-Module und der möglichen Zugriffsmechanismen.

Der Zugriff auf die Funktions-Module der Funktions-Gruppe BGROUP erfolgt hierbei durch das Auslesen oder das Verändern von Daten dieser Funktions-Module oder von gemeinsamen Daten dieser Funktions-Module. Die Zusatz-Funktions-Module APP11 bis APP13 sind somit mit den Funktions-Modulen der Funktions-Gruppe BGROUP über die Zugangs-Funktion ACC1 datenmäßig gekoppelt. Die interne Datenstruktur der Funktions-Gruppe BGROUP wird hierzu von der Zugangs-Funktion ACC1 auf eine für die Funktions-Gruppe GROUP1 individuelle externe Datenstruktur abgebildet. Der Zugriff auf die Funktions-Module der Funktions-Gruppe BGROUP erfolgt somit durch Zugriff der Zusatz-Funktions-Module APP11 bis APP13 auf die diesen Modulen über die logische Schnittstelle INT1 angebotenen Daten gemäß der für die Funktions-Gruppe GROUP1 individuelle externe Datenstruktur.

Die individuelle Darstellung und die individuellen Zugriffsmöglichkeiten ergeben sich hierbei durch die Wahl dieser externen Datenstruktur. Die Beschränkung der Zugriffsmöglichkeiten der Zusatz-Funktions-Modulen APP11 bis APP13 wird durch die Gestaltung der externen Datenstruktur erreicht: Nur diejenigen Daten sind in dieser über die logische Schnittstelle INT1 angebotenen externen Datenstruktur enthalten, auf die Zugriffs-Möglichkeiten der Zusatz-Funktions-Module APP11 bis APP13 erforderlich sind. Die übrigen Daten der Funktions-Gruppe BGROUP bleiben den Zusatz-Funktions-Modulen APP11 bis APP13 bei einer derart gewählten Datenstruktur verborgen und es besteht für sie keine Möglichkeit, diese Daten zu verändern.

Es ist weiter möglich, den Zugriff auf die Daten der Funktions-Gruppe BGROUP durch die Festlegung von individuellen Zugriffs-Rechten der Zusatz-Funktions-Module APP11 bis APP13 auf der über die logische Schnittstelle INT1 angebotenen externen Datenstruktur zu begrenzen.

Eine weitere Möglichkeit des Zugriffs der Zusatz-Funktions-Module APP11 bis APP13 auf die Funktions-Module der Funktions-Gruppe BGROUP ist, daß von der Zugangs-Funktion ACC1 diese Funktions-Module auf ein für die Funktions-Gruppe GROUP1 individuelles Objektmodell abgebildet werden, dieses Objektmodell den Zusatz-Funktions-Modulen APP11 bis APP13 über die logische Schnittstelle INT1 bereitgestellt wird und diese durch Ausführen von Operationen auf diesem bereitgestellten Objektmodell auf die Funktions-Module der Funktions-Gruppe BGROUP zugreifen. Auch hier ist eine Begrenzung der Zugriffs-Möglichkeiten durch die Gestaltung dieses individuellen, externen Objektmodells oder durch die Zuteilung von Rechten in Bezug auf die Durchführung von bestimmten Operationen auf diesem individuellen externen Objektmodell möglich.

Eine weitere Möglichkeit des Zugriffs der Zusatz-Funktions-Module APP11 bis APP13 auf die Funktions-Module der Funktions-Gruppe BGROUP ist der Meldungsaustausch dieser Module über die Zugangs-Funktion ACC1, insbesondere das Anfordern von Diensten der Funktions-Module der Funktions-Gruppe BGROUP durch die Zusatz-Funktions-Module APP11 bis APP13. Auch hierbei würde der Meldungsaustausch durch die Zugangs-Funktion ACC1 individuell beschränkt, beispielsweise in dem nur ein Meldungsaustausch mit bestimmten Funktions-Modulen der Funktions-Gruppe BGROUP zugelassen würde. Es ist auch möglich, über die logische Schnittstelle INT1 eine individuelle virtuelle Funktions-Gruppe BGROUP bereitzustellen, die nur bestimmte Dienste der Funktions-Gruppe BGROUP in einer individuellen Form bereitstellt und eine individuelle Darstellung der Funktions-Gruppe BGROUP erzeugt.

Ein Zugriff der Zusatz-Funktions-Module APP11 bis APP23, KONVERT1 und KONVERT2 auf die Funktions-Module der Funktions-Gruppe BGROUP ist allein über das Zugangs-Modul ACC möglich. Bei einem solchen Zugriff ordnet das Zugangs-Modul ACC entsprechend dem zugreifenden Zusatz-Funktions-Modul diesem eine der Zugangs-Funktionen ACC1 bis ACC4 zu, das diesem eine individuelle Zugriffs-Schnittstelle bereitstellt. Die Zugangs-Funktionen ACC1 bis ACC4 sind über die Kommunikations-Funktion INTERCOM mit den Funktions-Modulen der Funktions-Gruppe BGROUP verkoppelt und verfügen deshalb über die Möglichkeit eines beliebigen Zugriffs auf diese Funktions-Module. Von diesen möglichen Zugriffs-Möglichkeiten stellen die Zugangs-Funktionen ACC1 bis ACC4 den Zusatz-Funktions-Modulen jedoch nur eine individuell begrenzte Zugriffs-Möglichkeit mittels einer individuellen logischen Zugriffs-Schnittstelle zur Verfügung.

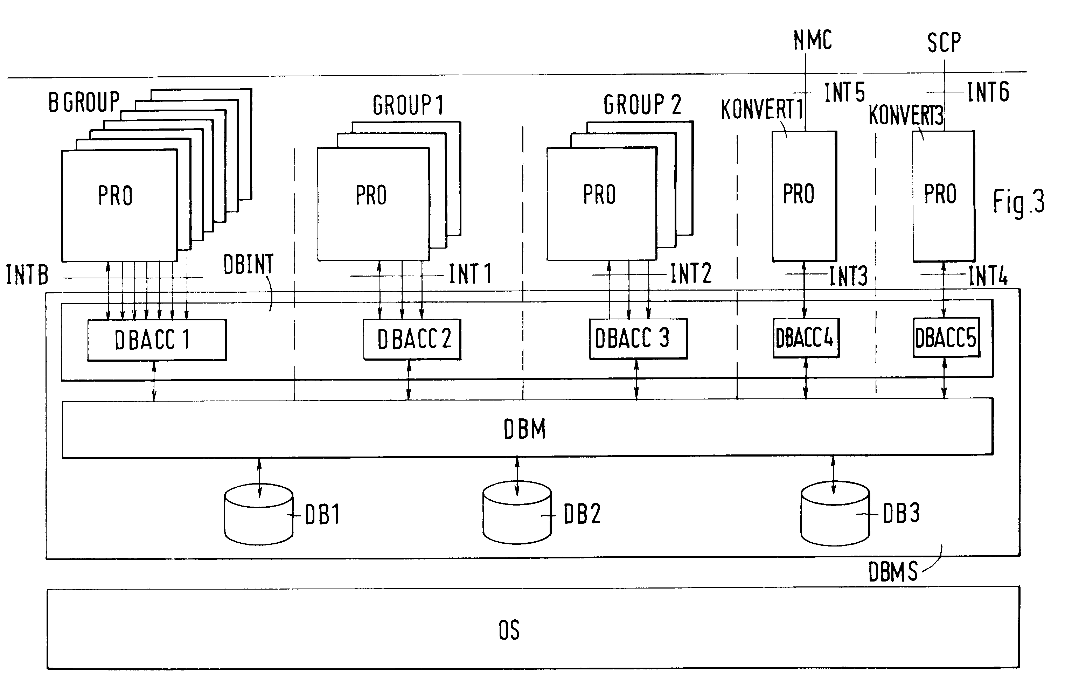

Fig. 3 zeigt eine mögliche Software-Realisierung der Funktionen der Steuereinrichtung CONTR nach Fig. 2 mit dem Betriebssystem OS, der Datenbank DBMS und einer Vielzahl von Prozessen PRO.

Die Prozesse PRO stellen jeweils die Durchführung eines Programms durch eines der Rechnersysteme der Steuereinrichtung CONTR dar. Ein solcher Prozess stellt so beispielsweise die Erbringung der Funktionen einer der Funktions-Module APP1 bis APP3 und BP1 bis BP3 oder der Zusatz-Funktions-Module APP11 bis APP23, KONVERT1 oder KONVERT2 dar. Die Prozesse PRO sind in fünf Gruppen geordnet:
- Prozesse der Funktions-Gruppe BGROUP, d.h. Prozesse, die die Durchführung von Funktionen der Funktions-Module der Funktions-Gruppe BGROUP darstellen.
- Prozesse der Funktions-Gruppe GROUP1, d.h. Prozesse, die die Durchführung von Funktionen der Zusatz-Funktions-Module APP11 bis APP13 darstellen.
- Prozesse der Funktions-Gruppe GROUP2.
- Prozesse, die die Durchführung von Funktionen des Zusatz-Funktions-Moduls KONVERT1 darstellen.
- Prozesse, die die Durchführung von Funktionen des Zusatz-Funktions-Moduls KONVERT2 darstellen.

Das Betriebssystem OS verwaltet die Prozesse der Steuereinrichtung CONTR, insbesondere die Prozesse PRO, und bestimmt hierfür die Reihenfolge ihrer Durchführung, startet sie, bestimmt ihren Zustand und stellt ihnen Standartdienste zur Verfügung, die beispielsweise die Kommunikation zwischen Prozessen und zwischen Prozessen und Geräten der Steuereinrichtung CONTR1 durchführen. Weiter koordiniert und synchronisiert das Betriebssystem OS beim gleichzeitigen Ablaufen von mehreren Prozessen den Zugriff auf gemeinsame Betriebsmittel wie beispielsweise Rechnerkerne, Speicher oder Geräte.

Es ist auch möglich, daß es sich bei dem Betriebssystem OS um ein verteiltes Betriebssystem handelt, das auf mehreren zugrundeliegenden Rechnersystemen basiert. Es wäre weiter möglich, daß die Steuereinrichtung über mehrere eigenständigen Betriebssysteme verfügt.

Die Datenbank DBMS verwaltet unter Kenntnis des internen Datenmodells die Daten der Funktions-Module APP1 bis APP3 und BP1 bis BP4 sowie die gemeinsamen Daten dieser Funktions-Module. Sie verwaltet so alle relevanten Daten, die den internen Betrieb des Vermittlungssystems bestimmen und darstellen. Aus logischer Sicht stellt die Datenbank DBMS einen oder mehrere spezielle Prozesse dar, die Daten verwalten und sie den Prozessen PRO auf Anforderung zur Verfügung stellen oder sie auf deren Anforderung manipulieren.

Es ist hierbei möglich, daß es sich bei der Datenbank DBM um eine auf mehrere Rechnersysteme verteilte Datenbank handelt. Es wäre weiter möglich, daß nicht alle Daten der Funktions-Module APP1 bis APP3 und BP1 bis BP4 von der Datenbank DBMS verwaltet werden oder daß auch Daten der Zusatz-Funktions-Module in der Datenbank DBMS verwaltet werden.

Die Datenbank DBMS weist drei Datenbasen DB1 bis DB3, einen Datenbankverwalter DBM und eine Datenbank-Zugangseinheit DBINT auf.

Die Datenbasen DB1 bis DB3 stellen die Speichermedien dar, in denen die von der Datenbank DBMS verwalteten Daten physikalisch abgespeichert sind. Bei diesen Speichermedien handelt es sich beispielsweise um ein oder mehrere Massenspeicher der Rechnersysteme der Steuereinrichtung CONTR, beispielsweise um Festplattenlaufwerke.

Der Datenbankverwalter DBM führt die eigentlichen Verwaltungsfunktionen für die auf den Datenbasen DB1 bis DB3 abgespeicherten Daten der Datenbank DBMS durch. Sie bestimmt die auf die Daten möglichen Zugriffsmechanismen und verwaltet das interne Datenmodell, gemäß dem ein Zugriff auf die Daten erfolgt. Sie führt so mittels der Kenntnis dieses Datenmodells die eigentlichen Zugriffsoperationen auf die in den Datenbasen DB1 bis DB3 physikalisch abgespeicherten Daten durch.

Die Datenbank-Zugangseinheit DBINT stellt die Schnittstelle zwischen der Datenbank DBMS und den Prozessen PRO bereit und unterstützt somit beispielsweise insbesondere eine Datenbank-Zugriffs-Sprache, mittels der der Zugriff der Prozesse PRO auf die Datenbank DBMS möglich ist. Solch eine Datenbank-Zugriffs-Sprache ist beispielsweise die Datenbank-Zugriffs-Sprache SQL (Standard Query Language) oder NDL (Network Database Language). Es kann sich hierbei auch um eine spezielle propriertäre Datenbank-Zugriffs-Sprache oder Zugriffsprotokoll handeln.

Beim Zugriff eines der Prozesse PRO ermittelt die Datenbank-Zugriffs-Einheit DBINT zunächst, welcher der Zugangs-Funktions-Module APP11 bis APP23, KONVERT1 und KONVERT2 der entsprechende Prozess angehört. Es bestimmt somit das zugreifende Zusatz-Funktions-Modul. Es ist hierbei auch möglich, daß nicht die genaue Identität des einzelnen Zusatz-Funktions-Moduls bestimmt wird sondern die Funktions-Gruppe, der es zugeordnet ist. Diese Ermittlung wird hierbei dadurch realisiert, daß eine dem zugreifenden Zusatz-Funktions-Modul zugeordnete Kennung bei einer Zugriffs-Anforderung mit übertragen wird oder eine solche Kennung von der Datenbank-Zugangseinheit DBINT angefordert wird.

Entsprechend dem identifizierten Zusatz-Funktions-Modul stellt nun die Datenbank-Zugangseinheit DBINT einen individuellen Datenbankzugang DBACC1 bis DBACC4 zur Verfügung. Den Prozessen der Funktions-Gruppe BGROUP, der Funktions-Gruppe GROUP1, der Funktions-Gruppe GROUP2, des Zusatz-Funktions-Moduls KONVERT1 und des Zusatz-Funktions-Moduls KONVERT3 wird somit der Datenbankzugang DBACC1, DBACC2, DBACC3, DBACC4 bzw. DBACC5 zur Verfügung gestellt. Der Datenbankzugang DBACC ermöglicht den Zugriff auf alle von der Datenbank DBMS verwalteten Daten gemäß der internen Datenstruktur. Die Prozesse PRO der Funktionsgruppe BGROUP sind somit gemäß der internen Datenstruktur eng miteinander verkoppelt.

Die Datenbank-Zugänge DBACC2 bis DBACC5 erbringen jeweils die den Zugangs-Funktionen ACC1, ACC2, ACC3 bzw. ACC4 zugeordneten Funktionen und gewähren somit einen individuell beschränkten Zugriff auf die Daten der Datenbank DBM gemäß einer individuellen Darstellungsweise.

Im einfachsten Fall wäre es möglich, daß die Datenbankzugänge DBACC2 bis DBACC5 jeweils die Zugriffs-Rechte auf die Daten der Datenbank DBM individuell beschränken, und den Zusatz-Funktions-Modulen somit eine in dieser Hinsicht geändertes Datenmodell für den Zugriff auf die Daten der Datenbank DBM über die logischen Schnittstellen INT1 bis INT4 zur Verfügung gestellt wird.

## Patentansprüche

1. Verfahren zum Einbinden von Zusatz-Funktions-Modulen (APP11 bis APP23, KONVERT1, KONVERT2) in eine Steuereinrichtung (CONTR) eines Vermittlungssystems (SW), die mit einer Vielzahl von miteinander verkoppelten Basis-Funktions-Modulen (APP1 bis APP3, BP1 bis BP4) zur Steuerung von Vermittlungsfunktionen des Vermittlungssystems (SW) versehen ist,
**dadurch gekennzeichnet ,** daß
Basis-Funktions-Module (APP1 bis APP3, BP1 bis BP4) mit einem oder mit mehreren Zugangs-Modulen (ACC) verkoppelt werden, daß die Zusatz-Funktions-Module (APP11 bis APP23, KONVERT1, KONVERT2) allein über die Zugangs-Module (ACC) auf Basis-Funktions-Module (APP1 bis APP3, BP1 bis BP4) zugreifen und daß die Zugangs-Module (ACC) abhängig von dem zugreifenden Zusatz-Funktions-Modul (APP11 bis APP23, KONVERT1, KONVERT2) den Zusatz-Funktions-Modulen (APP11 bis APP23, KONVERT1, KONVERT2) jeweils eine individuelle logische Zugriffs-Schnittstelle (INT1 bis INT4) zu Basis-Funktions-Modulen (APP1 bis APP3, BP1 bis BP4) bereitstellen.

2. Verfahren nach Anspruch 1, dadurch gekennzeichnet, daß die Zugangs-Module (ACC) den Zugriff über die individuellen logischen Schnittstellen (INT1 bis INT4) individuell begrenzen.

3. Verfahren nach Anspruch 1, dadurch gekennzeichnet, daß die Zugangs-Module (ACC) eine individuelle Darstellung des internen Betriebs erzeugen und über die individuelle logische Schnittstelle (INT1 bis INT4) den Zusatz-Modulen (APP11 bis APP23, KONVERT1, KONVERT2) bereitstellen.

4. Verfahren nach Anspruch 1, dadurch gekennzeichnet, daß die Zusatz-Funktions-Module (APP11 bis APP23; KONVERT1, KONVERT2) für den Zugriff auf die Basis-Funktions-Module (APP1 bis APP3, BP1 bis BP4) auf Daten der Basis-Funktions-Module (APP1 bis APP3, BP1 bis BP4) zugreifen und die Daten den Zusatz-Funktions-Modulen (APP11 bis APP23, KONVERT1, KONVERT2) über ihre individuelle logische Schnittstelle gemäß einer individuellen Datenstruktur zur Verfügung gestellt werden.

5. Verfahren nach Anspruch 4, dadurch gekennzeichnet, daß die Zusatz-Module (APP11 bis APP23; KONVERT1, KONVERT2) für logische Schnittstellen Daten gemäß einer internen Datenstruktur auf Daten gemäß einer individuellen externen Datenstruktur abbilden.

6. Verfahren nach Anspruch 4, dadurch gekennzeichnet, daß der Zugriff durch das Festlegen individueller Zugriffsrechte auf der individuellen Datenstruktur begrenzt wird.

7. Verfahren nach Anspruch 4, dadurch gekennzeichnet, daß der Zugriff durch die Gestaltung der individuellen Datenstruktur begrenzt wird.

8. Verfahren nach Anspruch 1, dadurch gekennzeichnet, daß die Zusatz-Funktions-Module (APP11 bis APP23, KONVERT1, KONVERT2) für den Zugriff auf die Basis-Funktions-Module (APP1 bis APP3, BP1 bis BP4) Operationen auf einem von ihrer logischen Schnittstelle bereitgestelltem individuellen Objektmodell ausführt.

9. Verfahren nach Anspruch 8, dadurch gekennzeichnet, daß die Zugangs-Module (ACC) aus Daten der Basis-Funktions-Module (APP1 bis APP3, BP1 bis BP4) für logische Schnittstellen jeweils ein individuelles Objektmodell erzeugt.

10. Verfahren nach Anspruch 1, dadurch gekennzeichnet, daß für die Kommunikation über eine logische Schnittstelle eine Datenbanksprache verwendet wird.

11. Vermittlungssystem (SW) mit einer Steuereinrichtung (CONTR), die mit einer Vielzahl von miteinander verkoppelten Basis-Funktions-Modulen (APP1 bis APP3, BP1 bis BP4) zur Steuerung von Vermittlungsfunktionen des Vermittlungssystems versehen ist,
**dadurch gekennzeichnet ,** daß die
Steuerungseinrichtung mit Zusatz-Funktions-Modulen (APP11 bis APP23, KONVERT1, KONVERT2) und mit einer oder mit mehreren Zugangs-Modulen (ACC) versehen ist, daß die Zugangs-Module (ACC) mit Basis-Funktions-Modulen (APP1 bis APP3, BP1 bis BP4) verkoppelt sind, daß die Steuereinrichtung (CONTR) so ausgestaltet ist, daß die Zusatz-Funktions-Module (APP11 bis APP23, KONVERT1, KONVERT2) allein über die Zugangs-Module (ACC) auf die Basis-Funktions-Module (APP1 bis APP3, BP1 bis BP4) zugreifen und daß die Zugangs-Module (ACC) so ausgestaltet sind, daß sie abhängig von dem zugreifenden Zusatz-Funktions-Modul (APP11 bis APP23, KONVERT1, KONVERT2) den Zusatz-Funktions-Modulen (APP11 bis APP23, KONVERT1, KONVERT2) jeweils eine individuelle logische Zugriffs-Schnittstelle zu Basis-Funktions-Modulen (APP1 bis APP3, BP1 bis BP4) bereitstellen.

12. Vermittlungssystem nach Anspruch 11, dadurch gekennzeichnet, daß die Zusatz-Funktions-Module (APP1 bis APP3, BP1 bis BP4) jeweils von einem oder mehreren Anwendungsprogrammen gebildet werden, die auf einer Systemplattform der Steuereinrichtung (CONTR) ablaufen.
